# FASCICULE DE BREVET EUROPEEN

(11) **EP 0 800 886 B1**
(45) Date de publication et mention de la délivrance du brevet: **22.03.2000**
(21) Numéro de dépôt: 97420057.8
(22) Date de dépôt: 04.04.1997
(51) Int. Cl.: B23H 7/08

(54) **Structure de fil électrode pour électroérosion, procédé pour sa fabrication, et application à l'électroérosion**
Drahtschneidefunkenerosionselektrode, Verfahren zu ihrer Herstellung, und Verwendung in Funkenerosionsbearbeitung
Wire electrode structure, method for manufacturing, and application in electroerosion machining

(30) Priorité: 11.04.1996 FR 9604894
(43) Date de publication de la demande: 15.10.1997
(73) Titulaire: THERMOCOMPACT, 74370 Metz Tessy (FR)
(72) Inventeur: Lacourcelle, Louis, 34700 Saint Jean de la Blaquiere (FR)
(74) Mandataire: Poncet, Jean-François

(56) Documents cités:
- EP-A- 0 381 595
- PATENT ABSTRACTS OF JAPAN vol. 011, no. 157 (M-590), 21 Mai 1987 & JP 61 288932 A (FURUKAWA ELECTRIC CO LTD:THE), 19 Décembre 1986,
- PATENT ABSTRACTS OF JAPAN vol. 011, no. 210 (M-604), 8 Juillet 1987 & JP 62 028123 A (FURUKAWA ELECTRIC CO LTD:THE), 6 Février 1987,
- PATENT ABSTRACTS OF JAPAN vol. 013, no. 282 (M-843), 28 Juin 1989 & JP 01 078724 A (FANUC LTD), 24 Mars 1989,
- DATABASE WPI Section Ch, Week 9225 Derwent Publications Ltd., London, GB; Class M11, AN 92-206348 XP002026230 & JP 61 279 433 A (FURUKAWA ELECTRIC CO LTD) , 10 Décembre 1986

## Description

La présente invention concerne les fils électrodes pour électroérosion, que l'on utilise pour l'usinage de pièces en matériau conducteur de l'électricité dans une machine d'électroérosion.

Le fil électrode pour électroérosion comprend généralement une âme ou au moins une couche intermédiaire en métal bon conducteur de l'électricité, et une couche superficielle en métal ou alliage identique ou différent. Le fil électrode est déplacé axialement dans une zone d'étincelage, dans laquelle il est guidé par des guides d'entrée et des guides de sortie. Une tension électrique est appliquée entre le fil électrode et la pièce à usiner qui elle-même est placée dans la zone d'étincelage, pour produire dans ladite zone d'étincelage des trains d'étincelles entre le fil et la pièce. Les étincelles produisent simultanément l'usure du fil et l'usure de la pièce. Un liquide diélectrique occupe la zone d'étincelage entre le fil et la pièce. Dans certaines machines d'électroérosion, le liquide est un bain, dans lequel on produit une circulation pour l'évacuation des déchets. Dans d'autres machines, le liquide est amené par aspersion.

Par déplacement relatif du fil et de la pièce dans le sens radial par rapport à l'axe du fil, on découpe dans la pièce une surface de forme désirée.

Les fils électrodes utilisés sont généralement de faible diamètre, fréquemment de 0,2 millimètres environ, et ils doivent être tendus correctement dans la zone d'étincelage pour assurer une bonne précision d'usinage.

Un premier problème que l'on rencontre dans les machines d'électroérosion à fil électrode est le risque fréquent de casse du fil. En cas de casse, la machine d'électroérosion est généralement prévue pour enfiler à nouveau le fil automatiquement ou manuellement. On comprend qu'il en résulte une baisse de rendement de la machine, et l'enfilage du fil peut s'avérer parfois très délicat à cause du faible diamètre du fil, de sa flexibilité, et du faible diamètre des guides dans lesquels il doit passer.

On constate que les risques de casse ont tendance à augmenter avec le temps, pendant l'usinage des pièces.

Un second problème que l'on rencontre dans l'électroérosion à l'aide de fils électrodes est l'obtention d'un état de surface satisfaisant. En effet, l'électroérosion agit par étincelage, c'est-à-dire par action érosive d'étincelles électriques discontinues sur la pièce. Les discontinuités d'étincelles produisent sur la pièce un état de surface dont la régularité n'est pas toujours suffisante en fonction des exigences et des applications de la pièce. Pour obtenir une précision dimensionnelle suffisante de la surface usinée, les machines réalisent l'usinage en plusieurs étapes, avec une dernière étape de finition à très faible enlèvement de matière sur la pièce. Mais le coefficient de rugosité habituellement obtenu sur la surface de la pièce n'est pas toujours suffisant, et on constate l'existence de stries visibles sur la surface de la pièce. Les solutions connues pour améliorer l'état de surface obtenu consistent à réduire l'intensité du courant d'étincelage, et/ou à diminuer la durée de l'étincelle. Mais il en résulte une diminution sensible de la rapidité d'usinage. Dans tous les cas, un besoin existe d'améliorer l'état de surface et la précision dimensionnelle des pièces usinées, et d'éviter leur dégradation en cours d'usinage.

On sait également que certains fils électrodes tels que les fils en laiton à couche superficielle de zinc procurent un meilleur état de surface, par rapport à un fil à couche superficielle d'alliage de cuivre et de zinc diffusés, mais l'usinage est alors moins rapide et les risques de rupture du fil sont augmentés.

Diverses structures de fil électrode ont été proposées, comportant une couche superficielle en métal de transition ou en oxyde métallique : dans le EP-A-0 381 595, une couche superficielle est en fer, nickel, cobalt ou chrome ; dans le JP-A-01 078724, la couche superficielle est en manganèse ; dans le JP-A-61 279433 et le JP-A-61 288932, la couche superficielle est en oxyde de chrome ; dans le JP-A-62 028123, la couche superficielle est en oxyde de molybdène ou en oxyde de vanadium. Aucune de ces structures ne permet d'améliorer l'état de surface de la pièce usinée tout en réduisant les risques de rupture du fil et en augmentant la rapidité d'usinage.

Un problème proposé par l'invention est de concevoir une nouvelle structure de fil électrode pour électroérosion permettant de réduire les risques de rupture du fil et d'améliorer l'état de surface de la pièce usinée à l'aide dudit fil, sans réduire la rapidité de l'usinage.

Pour atteindre ces objets ainsi que d'autres, la solution selon l'invention consiste à effectuer une transformation structurale superficielle du fil électrode pour électroérosion, par formation de composés chimiques à partir du métal superficiel et d'un élément polyvalent combiné approprié de la classification périodique des éléments naturels.

Ainsi, un fil électrode pour électroérosion selon l'invention, ayant une couche périphérique en métal ou alliage, est caractérisé en ce qu'il comprend une couche superficielle de conversion contenant des composés chimiques dudit métal ou alliage et d'au moins un élément de transition polyvalent des groupes IV_{A}, V_{A}, VI_{A} ou VII_{A} des première, seconde ou troisième familles de la classification périodique des éléments naturels, c. à. d. les éléments comprenant Cr, Ti, V, Mn, Nb, Mo, W et Re.

Dans la couche superficielle de conversion, les atomes de métal ont perdu leurs propriétés métalliques et sont liés par des liaisons chimiques à des ions d'éléments de transition combinés.

De bons résultats sont obtenus en prévoyant une couche de conversion contenant des composés chimiques dudit métal ou alliage et du chrome hexavalent. La couche superficielle de conversion peut être une couche de conversion légère telle qu'une couche chromatée blanchie, ou une couche chromatée jaune irisée. En alternative, la couche superficielle de conversion peut être une couche plus épaisse.

Le métal ou l'alliage formant la couche périphérique du fil est choisi parmi le zinc, le cuivre, l'aluminium, le titane, le tungstène et leurs alliages. Le métal ou l'alliage présent en périphérie du fil peut former toute la section transversale du fil à l'intérieur de la couche superficielle de conversion. En alternative, le métal ou l'alliage présent en périphérie du fil peut former une couche périphérique entourant une âme ou une autre couche intermédiaire.

Ainsi, l'invention s'applique notamment à des fils en cuivre, en titane, en tungstène, en aluminium, en alliage de ces métaux, avec ou sans couche périphérique de zinc ou d'alliage de zinc, et à des fils d'acier recouverts de zinc ou d'alliage de zinc.

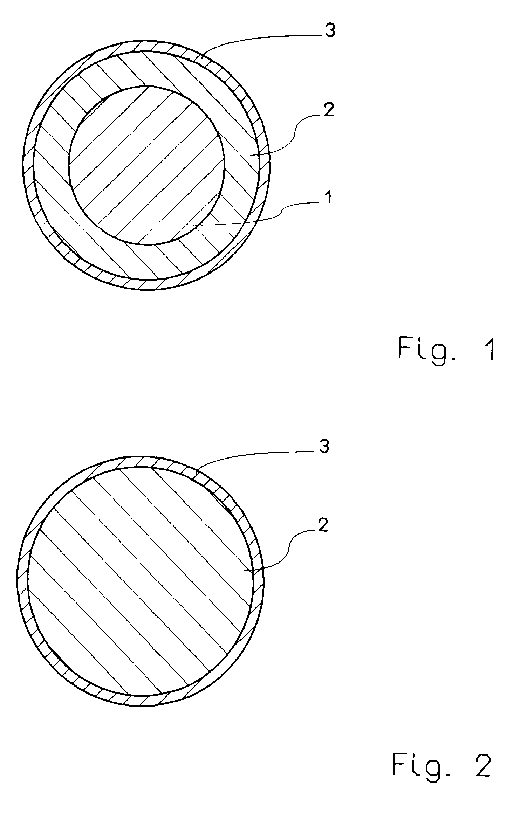

A titre d'illustration, la figure 1 représente, en coupe transversale, un fil électrode selon l'invention ayant une âme 1 en un premier matériau pouvant être l'acier, l'aluminium, le laiton ou tout autre matériau d'âme approprié, l'âme 1 étant recouverte d'une couche périphérique 2 en métal ou alliage elle-même recouverte d'une couche superficielle 3 de conversion. On notera que les épaisseurs représentées sont purement illustratives, et sont agrandies pour faciliter la compréhension.

La figure 2 illustre, en coupe transversale, une variante de réalisation du fil électrode selon l'invention, dans laquelle la couche périphérique 2 en métal ou alliage, recouverte de la couche superficielle 3 de conversion, forme toute la section intérieure du fil.

Un procédé de fabrication d'un tel fil à couche périphérique 2 en métal ou alliage et à couche superficielle 3 de conversion comprend une étape ultime de mise en contact du fil avec une solution d'ions simples ou composés d'au moins un élément de transition polyvalent des groupes IV_{A}, V_{A}, VI_{A} ou VII_{A} des première, seconde ou troisième familles de la classification périodique des éléments naturels, c. à. d. les éléments comprenant Cr, Ti, V, Mn, Nb, Mo, W et Re.

Au cours de ladite étape ultime, on peut avantageusement superposer un courant électrique passant entre la solution et le fil, créant une réaction d'échange entre la solution et la surface métallique du fil.

L'étape ultime de mise en contact avec une solution d'ions simples ou composés peut être assurée notamment par immersion, ou par aspersion. Des exemples de bains que l'on peut utiliser pour la réalisation de la couche de conversion sur le fil électrode pour électroérosion sont décrits ci-après.

Exemples de solutions permettant de réaliser une couche de conversion chromatée légère sur fil à couche périphérique de zinc ou d'alliage de zinc :

### Exemple 1 :

| | |
|---|---|
| chromate de potassium | 1,35 g/l |
| fluorure de sodium | 2,75 g/l |
| sulfate de sodium (anhydre) | 0,9 g/l |
| acide nitrique | 15 ml/l |

### Exemple 2 :

| | |
|---|---|
| bichromate de potassium | 1,28 g/l |
| alun de chrome (12 H₂ O) | 0,43 g/l |
| fluorure de sodium | 2,88 g/l |
| sulfate de sodium (hydrate) | 0,43 g/l |
| acide nitrique | 15 ml/l |

Exemples de composition pour réalisation d'une couche de conversion chromatée jaune irisée sur fil à couche périphérique de zinc ou d'alliage de zinc :

### Exemple 3 :

| | |
|---|---|
| anhydride chromique | 2 g/l |
| chlorure de sodium | 4 g/l |

### Exemple 4 :

| | |
|---|---|
| anhydride chromique | 5,5 g/l |
| bichromate de sodium (2 H₂ O) | 5,5 g/l |
| sulfate de sodium (10 H₂ O) | 2,2 g/l |
| acide nitrique (40° B) | 3,6 ml/l |

### Exemple 5 :

| | |
|---|---|
| anhydride chromique | 6,5 g/l |
| sulfate de magnésium (7 H₂ O) | 0,8 g/l |
| acide nitrique | 1,5 ml/l |
| acide acétique (glacial) | 1,5 ml/l |

Exemple de solution permettant de réaliser une couche de conversion chromatée plus épaisse sur fil à couche périphérique de zinc ou d'alliage de zinc :

### Exemple 6 :

| | |
|---|---|
| formiate d'ammonium | 50 g/l |
| anhydride chromique | 20 g/l |
| acide nitrique | 30 ml/l |

Autre exemple de solution pour réaliser une couche de conversion à teneur en sels de molybdène sur fil à couche périphérique de zinc ou d'alliage de zinc :

### Exemple 7 :

| | |
|---|---|
| molybdate d'ammonium | 20 g/l |
| sulfate de nickel | 40 g/l |
| acide borique | 20 g/l |

Exemple de solution permettant de réaliser une couche de conversion chromatée sur fil en cuivre ou alliage de cuivre :

### Exemple 8 :

| | |
|---|---|
| bichromate de sodium | 75 g/l |
| nitrate de sodium | 2 g/l |
| phosphate diammonique | 1 g/l |

Pour réaliser une couche de conversion sur les métaux autres que le zinc, le cuivre ou leurs alliages, l'homme du métier pourra trouver dans le commerce des formulations adaptées.

Selon l'invention, il peut s'avérer suffisant de prévoir une couche de conversion telle qu'une couche chromatée légère ou jaune irisée, obtenue par les solutions des exemples 1 à 5 ci-dessus.

On constate qu'un procédé d'électroérosion utilisant un fil à couche superficielle de conversion présente des risques réduits de rupture du fil dans la machine d'électroérosion, et permet d'obtenir un état de surface plus régulier sur la pièce à usiner. Les risques de rupture de fil sont en particulier réduits au niveau des guides d'entrée dans la zone d'usinage.

On constate aussi que l'état de surface et la précision dimensionnelle des pièces usinées restent dans des tolérances satisfaisantes même après une longue durée d'usinage, et l'on constate simultanément une moindre usure des guides d'entrée et des guides de sortie dans la machine d'électroérosion.

La présente invention n'est pas limitée aux modes de réalisation qui ont été explicitement décrits, mais elle en inclut les diverses variantes et généralisations contenues dans le domaine des revendications ci-après.

## Revendications

1. Fil électrode pour électroérosion, dont au moins la périphérie (2) est composée d'un métal ou alliage choisi parmi le zinc, le cuivre, l'aluminium, le titane, le tungstène et leurs alliages, caractérisé en ce qu'il comprend une couche superficielle (3) de conversion contenant des composés chimiques dudit métal ou alliage et d'au moins un élément de transition polyvalent choisi parmi les éléments comprenant Cr, Ti, V, Mn, Nb, Mo, W et Re.

2. Fil électrode selon la revendication 1, caractérisé en ce que la couche superficielle (3) de conversion contient des composés chimiques dudit métal ou alliage et du chrome hexavalent.

3. Fil électrode selon la revendication 2, caractérisé en ce que la couche superficielle (3) de conversion est une couche chromatée légère ou jaune irisée.

4. Fil électrode selon l'une quelconque des revendications 1 à 3, caractérisé en ce que ledit métal ou alliage de la périphérie (2) forme toute la section transversale du fil à l'intérieur de ladite couche superficielle (3) de conversion.

5. Fil électrode selon l'une quelconque des revendications 1 à 3, caractérisé en ce que ledit métal ou alliage forme une couche périphérique (2) entourant une âme (1) ou une autre couche intermédiaire.

6. Procédé de fabrication d'un fil électrode pour électroérosion dont au moins la périphérie (2) est composée d'un métal ou alliage choisi parmi le zinc, le cuivre, l'aluminium, le titane, le tungstène et leurs alliages, caractérisé en ce qu'il comprend une étape ultime de mise en contact du fil avec une solution d'ions simples ou composés d'au moins un élément de transition polyvalent choisi parmi les éléments comprenant Cr, Ti, V, Mn, Nb, Mo, W et Re pour former une couche superficielle (3) de conversion.

7. Procédé selon la revendication 6, caractérisé en ce que, au cours de ladite étape ultime, on superpose un courant électrique passant entre la solution et le fil, créant une réaction d'échange entre la solution et la surface métallique du fil.

8. Procédé d'électroérosion , caractérisé en ce qu'on utilise un fil d'électroérosion selon l'une quelconque des revendications 1 à 5.

## Patentansprüche

1. Drahtelektrode für eine Funkenerosion, bei welcher wenigstens der Umfang (2) aus einem Metall oder einer Legierung besteht, ausgewählt unter Zink, Kupfer, Aluminium, Titan, Wolfram und ihren Legierungen, dadurch gekennzeichnet, daß sie eine Umwandlung-Oberflächenschicht (3) aufweist, die aus chemischen Verbindungen des besagten Metalls oder der Legierung und aus wenigstens einem polyvalenten Übergangselement besteht, ausgewählt unter den Elementen, welche Cr, Ti, V, Mn, Nb, Mo, W und Re umfassen.

2. Drahtelektrode nach Anspruch 1, dadurch gekennzeichnet, daß die Umwandlung-Oberflächenschicht (3) chemische Verbindungen des besagten Metalls oder der Legierung und des sechswertigen Chroms enthält.

3. Drahtelektrode nach Anspruch 2, dadurch gekennzeichnet, daß die Umwandlung-Oberflächenschicht (3) eine leicht chromatisierte oder gelb schillernde Schicht ist.

4. Drahtelektrode nach einem der Ansprüche 1 bis 3, dadurch gekennzeichnet, daß das besagte Metall oder die Legierung des Umfangs (2) den gesamten Querschnitt des Drahtes im Innern der besagten Umwandlung-Oberflächenschicht (3) bildet.

5. Drahtelektrode nach einem der Ansprüche 1 bis 3, dadurch gekennzeichnet, daß das besagte Metall oder die Legierung eine Umfangsschicht (2) bildet, die einen Kern (1) oder eine andere Zwischenschicht umgibt.

6. Verfahren zur Herstellung einer Drahtelektrode für die Funkenerosion, bei welcher wenigstens der Umfang (2) aus einem Metall oder einer Legierung besteht, ausgewählt unter Zink, Kupfer, Aluminium, Titan, Wolfram und ihren Legierungen, dadurch gekennzeichnet, daß es eine letzte Stufe aufweist, bei welcher der Draht mit einer Lösung aus einfachen Ionen oder bestehend aus wenigstens einem polyvalenten Übergangselement in Berührung gebracht wird, ausgewählt unter den Elementen, welche Cr, Ti, V, Mn, Nb, Mo, W und Re umfassen, um eine Umwandlung-Oberflächenschicht (3) auszubilden.

7. Verfahren nach Anspruch 6, dadurch gekennzeichnet, daß im Verlauf der besagten letzten Stufe ein elektrischer Strom auferlegt wird, der zwischen der Lösung und dem Draht passiert, wobei eine Austauschreaktion zwischen der Lösung und der Metalloberfläche des Drahtes geschaffen wird.

8. Verfahren der Funkenerosion, dadurch gekennzeichnet, daß ein Funkenerosion-Draht gemäß einem der Ansprüche 1 bis 5 verwendet wird.

## Claims

1. Spark erosion electrode wire, with at least the periphery (2) composed of a metal or alloy selected from the group comprising zinc, copper, aluminium, titanium, tungsten and alloys thereof, characterised in that it includes a surface conversion layer (3) containing chemical compounds of said metal or alloy and at least one polyvalent transition element selected from the group of elements comprising Cr, Ti, V, Mn, Nb, Mo, W and Re.

2. Electrode wire according to claim 1, characterised in that the surface conversion layer (3) contains chemical compounds of said metal or alloy and hexavalent chromium.

3. Electrode wire according to claim 2, characterised in that the surface conversion layer (3) is a light or iridescent yellow chromate layer.

4. Electrode wire according to any one of claims 1 to 3, characterised in that said metal or alloy of the periphery (2) forms all of the cross-section of the wire within said surface conversion layer (3).

5. Electrode wire according to any one of claims 1 to 3, characterised in that said metal or alloy forms a peripheral layer (2) around a core (1) or another intermediate layer.

6. Method of manufacturing a spark erosion electrode wire with at least the periphery (2) composed of a metal or alloy selected from the group comprising zinc, copper, aluminium, titanium, tungsten and alloys thereof, characterised in that it includes a final step of bringing the wire into contact with a solution of simple or composite ions of at least one polyvalent transition element selected from the group of elements comprising Cr, Ti, V, Mn, Nb, Mo, W and Re to form a surface conversion layer (3).

7. Method according to claim 6, characterised in that, during said final step, an electrical current flowing between the solution and the wire is superimposed, creating an exchange reaction between the solution and the metal surface of the wire.

8. Spark erosion process, characterised in that a spark erosion wire according to any one of claims 1 to 5 is used.
